# EUROPEAN PATENT APPLICATION

(11) **EP 4 293 452 A1**
(43) Date of publication of application: **20.12.2023**
(21) Application number: 22179086.8
(22) Date of filing: 15.06.2022
(51) Int. Cl.: G05B 19/418, G05B 19/042

(54) **A METHOD FOR RECOMMENDING AN OPERATIONAL COMMAND FOR AN INDUSTRIAL PLANT**

(71) Applicant: ABB SCHWEIZ AG, 5400 Baden (CH)
(72) Inventor: SCHMIDT, Benedikt, 69117 Heidelberg (DE); KLOEPPER, Benjamin, 68199 Mannheim (DE); BORRISON, Reuben, 68723 Schwetzingen (DE); KOTRIWALA, Arzam, 68526 Ladenburg (DE); RODRIGUEZ, Pablo, 68549 Ilvesheim (DE); SHARMA, Divyasheel, Bangalore, Karnataka 560048 (IN); DIX, Marcel, 78476 Allensbach (DE); GAERTLER, Marco, 69221 Dossenheim (DE); K R, Chandrika, Bangalore 560078 (IN); TAN, Ruomu, 68163 Mannheim (DE); DOPPELHAMER, Jens, 68526 Ladenburg (DE); ABUKWAIK, Hadil, 69469 Weinheim (DE)
(74) Representative: Maiwald GmbH

(57) **Abstract**

The invention relates to the field of controlling industrial plants, particularly for controlling industrial plants by an operational command. The invention discloses a computer-implemented method for recommending an operational command (32), which is able to control at least one actuator (16) of the industrial plant (10). The method comprises the steps of:
receiving an alarm (45) from at least one sensor and/or from an operator (20) of the plant (10), wherein the alarm (45) is related to a current state (40) of the plant (10);
obtaining the current state (40) of the plant (10), the current state (40) comprising at least one current process value and/or at least one current operational command (22) related to the plant (10);
comparing the current state (40) of the plant (10) to a list of historic states (30) of the plant (10), each historic state (30) comprising a plurality of historic process values (34) and/or at least one historic operational command (32) related to the plant (10);
if the current state (40) matches to a subset of at least one of the historic states (30), starting a simulation, based on a simulation model (18) of the plant (10) and the matching historic state (30) as starting state;
running a plurality of simulations, each simulation based on a variation of at least one of the historic operational commands (32);
determining, for each simulation of the plurality of simulations, a quality value, based on at least one quality criterion; and
recommending the variation of the operational command (32), which resulted in the simulation with the highest quality value.

## Description

### Field of the Invention

The invention relates to the field of controlling industrial plants, particularly for controlling industrial plants by an operational command. The invention further relates to a program element, to a computer-readable storage medium and to a use.

### Background

Operating an industrial plant is, at least for some plants, a highly complex task. Well trained operators often have a good understanding of a behaviour of the plant, which enables the operator to perform a well-suited operational command for controlling the plant in numerous situations. This may include critical situations of the plant and/or alarm situations. However, in at least some situations, a recommendation for an operational command may be useful.

### Description

It is an objective of the invention to provide a method for recommending an operational command. This objective is achieved by the subject-matter of the independent claims. Further embodiments are evident from the dependent claims and the following description.

One aspect relates to a computer-implemented method for recommending an operational command, which is able to control at least one actuator of an industrial plant, the method comprising the steps of:
receiving an alarm from at least one sensor and/or from an operator of the plant,
wherein the alarm is related to a current state of the plant; obtaining the current state of the plant, the current state comprising at least one current process value and/or at least one current operational command related to the plant; comparing the current state of the plant to a list of historic states of the plant, each historic state comprising a plurality of historic process values and/or at least one historic operational command related to the plant;
if the current state matches to a subset of at least one of the historic states, starting a simulation, based on a simulation model of the plant and the matching historic state as starting state;
running a plurality of simulations, each simulation based on a variation of at least one of the historic operational commands;
determining, for each simulation of the plurality of simulations, a quality value, based on at least one quality criterion; and
recommending the variation of the operational command, which resulted in the simulation with the highest quality value.

An industrial plant may be configured for running a process, which may comprise several sub-processes, which may be connected. The process may be a chemical process, a manufacturing process for any type of goods, and/or another type of process. The plant or process may be influenced and/or controlled by an operational command, e.g. entered by an operator. The operational command may be able to control at least one actuator of the industrial plant. The plant's actuators may comprise a controlling element, such as a valve, heater, motor, an indicator element, e.g. an alarm indicator (e.g. a lamp and/or a message), other elements. A sufficiently complex industrial plant may comprise a plurality of these elements. Controlling the at least one actuator of the industrial plant may comprise a direct control of the actuator and/or an indirect control, for instance by changing a setpoint.

An alarm may be caused and/or come from at least one sensor and/or from an operator of the plant. At least some sensors may be part of an actuator, e.g. a sensor that indicates a position of the actuator, for instance "valve is half open". The alarm may be "related" to a current state of the plant, for instance when the alarm is caused and/or received within the same timeframe as the current state, and/or immediately before this timeframe.

The alarm may be or may indicate any critical situation of the plant. For instance, if the plant's criticality is expressed between 0 and 9, with "0 = normal run", or by "green / yellow / red", with "green = normal run", then a critical situation may be "not 0" or "not green". The alarm may be caused or sent by at least one sensor, or may be result of consolidating and/or pre-processing process values from a plurality of sensors. Or an alarm may be received, when an operator presses a predefined button. The alarm may be or may comprise an alert and/or a notification related to the plant and/or process.

When obtaining the current state of the plant, in many cases not all current process values from all sensors may be obtained, but rather current process values from a predefined subset of the sensors of the plant. The predefined subset of the sensors may comprise sensors that are located outside the plant - and thus "related" to the plant -, e.g. a temperature sensor, which is configured for measuring a temperature of the plant's external environment.

For comparing the current state of the plant to a list of historic states of the plant, the historic states may have been obtained before and/or may be available in a journal of the plant, e.g. in a database. The list of historic states may have a form of a temporal sequence of historic states. Each historic state may comprise a plurality of historic process values and/or at least one historic operational command related to the plant. The historic state may have a different number of process values and/or operational commands than a comparable current state of the plant, e.g. more process values and/or operational commands. This may particularly be the case for large or complex plants, which may comprise several thousands of sensors, which deliver process values. In one or more test runs, when the historic states are obtained, more powerful computers and/or larger memories may be used than during productive runs of the plant. The number of process current values and/or operational commands may differ from one historic state to another one. The comparing step may compare, e.g., less current process values and/or operational commands to a higher number of historic process values and/or operational commands. At least in some cases, the comparing step may only consider a subset of the historic process values and/or operational commands. Hence, the matching to a subset of at least one of the historic states may be a matching to all the historic process values and/or operational commands, or a matching to a real subset (i.e. less values). Hence, the matching could be a complete match, or a partial match. The matching may comprise an exact matching, e.g. for sensors with binary and/or discrete values, or a kind of "similarity" match, e.g. for ranges of sensor values.

The matching may result in zero hits, or in one or more hits. In case of zero hits, no simulation may be started. In case of one hit, the simulation may be started with all the historic process values and/or operational commands that are included in the matching historic state. In case of two one or more hits, the simulation may be started for each one of the matching historic states. This may be a resolution strategy for a real-life problem of an operator: As a variety of parameters may influence operator decisions, there may remain some uncertainty, whether a situation at hand is really comparable to those situations which have been the basis for the selected strategy. In this method, the strategy may comprise to consider all situations - and, thus, the historic process values and/or operational commands - that may be relevant for the current state, and to recommend the operational command on this broad basis. The simulation method may comprise any simulation method that is appropriate for the plant's process(es).

Additionally or as an alternative, historic data of a plant control system may be used to extract operational strategies. Historic data may comprise sensor information of the process and events generated by control system components; these allow to capture a plant state at different moments in time. Furthermore, historic data may comprise so-called audit trails, which are events that represent the interaction of an operator with a plant. An audit trail of the operator commands and the information of the plant state may be used as a data foundation for the strategy extraction.

Based on the matching historic state, as starting state, a plurality of simulations may be run. As one option, the plant simulator may be brought into a state which is comparable to the situation of the historic interactions. As one option, the plant simulator may be brought into a state which is comparable to the situation of the operator in the plant. This initializing with the starting state provides a valid representation of the current state, thus enabling the simulation for testing some strategies that may be candidates for recommending the operational command. Each strategy may be created for one specific issue.

The plurality of simulations may reflect or may be based on strategies to deal with the current state, in other words: to test possible reactions on the alarm. One simulation of the plurality of simulations may use the historic operational command as data input. This may be used for testing the validity of the simulator and the starting state. Other simulations may comprise variations of operational commands, e.g. a variation of at least one of the historic operational commands, e.g. by removing steps of the historic commands, changing orders, and/or further ones. The variation(s) may comprise a variation, e.g, of a duration of operational commands, and/or of a time, intensity, etc. of activating an actuator, different setpoint values for setpoint changes, and/or random removal of steps. For instance, a module "Workflow Pertubator" may automatically create a variant of the workflow (perturbation), e.g., removing operator input/changing input values. The perturbed workflows may be applied to the process simulation instances. Each one of the simulations may end based on an end criterion, e.g. "stable state reached" or "exceeding a predefined number of simulation steps".

For each simulation of the plurality of simulations, a quality value may be determined, based on at least one quality criterion (or "success criterion"). The quality criteria may comprise "stable state reached", "is the plant's situation at the end of the simulation worsened or improved?", "can the alarm be deactivated?", a comparison of crucial values against said values as result of the historic operational command, a duration of a time period to deactivate the alarm, a number of processing steps to deactivate the alarm, return to normal state, alarm off, process variable range reached for ideal production, and/or further criteria. The criteria may be weighted and mapped to the quality value, which may - for easier comparison - be a numerical value.

Based on the quality value, a recommendation can be given, which variation resulted in the simulation run with the best result, more concretely: which operator actions, actuator activations, etc., lead to an optimal reaction of a given alarm. Moreover, "anti-recommendations" can be given, e.g. based on simulations that lead to a bad behaviour of the plant. The method can advantageously be used for training, for real situations on the plant, and/or as a basis for training an artificial neural net, ANN, for those situations.

In various embodiments, the method further comprises the steps of:
obtaining the list of historic states of the plant, each historic state comprising a plurality of historic process values and/or at least one historic operational command related to the plant; and
storing the list of historic states.

These steps may be performed in preparation of the steps described above. Additionally or as an alternative, said steps may be performed, e.g., continuously during the plant's run. The list of historic states of the plant may be stored in a repository, e.g. in a data base and/or in a cloud.

In various embodiments, the alarm is at least one of: A critical situation, characterized by exceeding of a predefined threshold of at least one current process value, and/or by a current operational command, an alarm of the plant's alarm system, a tripping of a predefined actuator, and/or a starting of a subsystem. Even before thresholds are exceeded or alarms are generated process variables may show unusual and in the long run problematic behaviour. The tripping may comprise a deactivating of at least one piece of equipment and/or a disrupting of an operational process.

In some embodiments, the comparing the current state of the plant to a list of historic states comprises to compare one state or a sequence of states. "One state" may be interpreted as to compare one current state to each one of the historic states. A "sequence of states" may be interpreted as to compare a sequence of current states, i.e. an ordered list of states, e.g. temporally sequential, to a sequence of historic states. The sequence may comprise two, three or more states, i.e. the same number of current states and historic states.

In various embodiments, the comparing comprises to use a similarity function. The similarity function may advantageously be useful for comparing similar values. For instance, for at least some sensors a "similarity" range may be defined. This "similarity" range may be a kind of "value tolerance", e.g. interpreting a historic process values with 5 % tolerance, so that "90 °C" may be interpreted as "between 85 °C and 95 °C".

In various embodiments, each simulation of the plurality of simulations is based on a variation of waiting times, of setpoint value ranges, and/or changing of orders, random removal of steps. This may comprise providing operator action strategies and/or operator workflows to the simulator in a previously activated state, e.g. under consideration of waiting times, setpoint value ranges, etc. which are part of the strategy, and logging the effects. Additionally or as an alternative, operator action strategies/operator workflows may be connected to goals - e.g. alarm off, efficiency represented by process variables, etc. - providing it to a simulator in a respective state and assessing whether the effect shown from simulation fits to the expectation.

In some embodiments, each one of the simulations is terminated when one of following criteria is reached: When the simulated process values are below a predefined threshold; when a composed alarm of the plant's alarm system is deactivated; and/or when a composed signal for normal plant operation is set.

The predefined threshold may characterize a "normal" or "non-critical state", i.e. the values of a subset of a related process variable do not exceed a threshold and/or return to a normal state. A composed alarm may be an alarm that is set and reset or deactivated by the plant's alarm system, e.g. by aggregating - simulated, current, or historic - process values. A composed signal for normal plant operation may comprise values of a subset of a related process variables that are suitable for an optimal plant operation.

In some embodiments, the quality criterion for determining the quality value comprises at least one of: A duration of a time period to deactivate the alarm, a number of processing steps to deactivate the alarm, a number of involved actuators, and/or a predefined operation range for process variables.

An aspect relates to a program element for executing the method as described above and/or below, when running the program element on a processing unit and/or a control unit of an industrial plant.

An aspect relates to a processing unit and/or a control unit of an industrial plant, configured for executing the method as described above and/or below.

An aspect relates to a computer-readable storage medium where a computer program or a computer program product as described above is stored on.

An aspect relates to a use of a method as described above and/or below, and/or to a control unit configured for executing said method, for recommending an operational command and/or for controlling an industrial plant by applying the recommended operational command.

For further clarification, the invention is described by means of embodiments shown in the figures. These embodiments are to be considered as examples only, but not as limiting.

### Brief Description of the Drawings

The drawings depict:
Fig. 1 schematically an arrangement according to an embodiment;
Fig. 2 a flow diagram according to an embodiment.

### Detailed Description of Embodiments

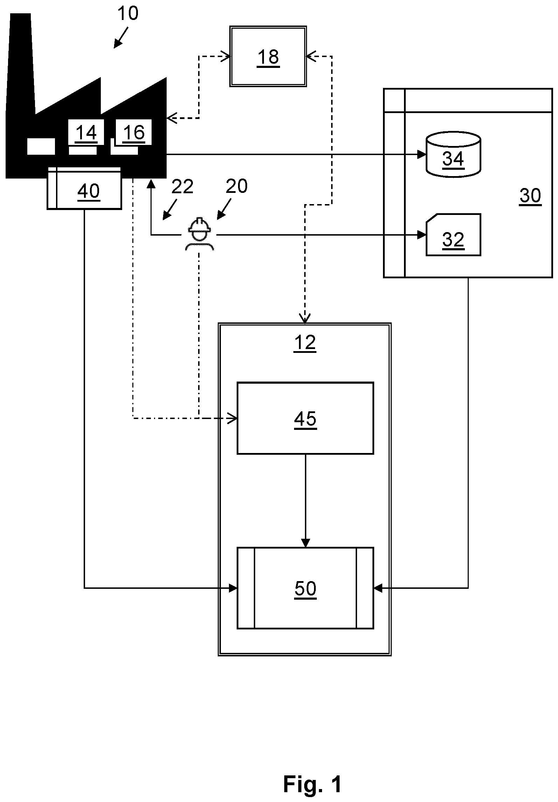

Fig. 1 shows schematically an arrangement according to an embodiment. The arrangement comprises an industrial plant 10, which may be configured for running a process. The process may comprise several sub-processes, which may be connected. The process may be a chemical process, a manufacturing process for any type of goods, and/or another type of process. The plant 10 or the process may be influenced and/or controlled by an operational command 22, e.g. entered by an operator 20. The operational command may be able to control at least one actuator 16 of the industrial plant. The plant's 10 actuators 16 may comprise a controlling element, such as a valve, heater, motor, an indicator element, e.g. an alarm indicator (e.g. a lamp and/or a message), other elements. For the plant 10, a simulation model 18 may be available. The method used for the simulation 18 may comprise any simulation method that is appropriate for the plant's process(es). Process values related to the plant 10 - e.g. values from sensors 14 inside or outside the plant 10, which may influence the plant's behaviour - may have been monitored and stored as historic process values 34. Also, operational commands 22 may have been monitored and stored as historic operational commands 32. The plurality of historic process values 34 and/or the historic operational commands 32 may be stored as a list of historic states 30, where each entry of this list contains historic process values 34 and/or the historic operational commands 32 of a distinct moment. The list of historic states 30 may have a form of a temporal sequence of historic states. The list of historic states 30 may be stored in a repository, such as a database, which may be sited in a cloud.

Also, a current state 40 of the plant 10 is monitored, particularly continuously monitored. The current state 40 comprises at least one current process value and/or at least one current operational command 22 related to the plant 10. When a critical situation appears - e.g. a combination of current process value and/or a current operational command 22 -, a processing unit and/or a control unit 12 of the plant 10 may receive an alarm 45. The alarm 45 may be related to a current state 40 of the plant 10, e.g. may indicate the critical situation. Then, the current state 40 of the plant 10 is obtained. The current state 40 may comprise at least one current process value and/or at least one current operational command 22 related to the plant 10. The current state 40 may be compared to the list of historic states 30. Depending on the result of the comparison, one or more simulations may be run in the simulator 18. As a result of the simulations, the processing unit and/or a control unit 12 may output a recommendation for an operational command 50. Additionally or as an alternative, the processing unit and/or a control unit 12 may, based on the recommendation, output an operational command (not shown).

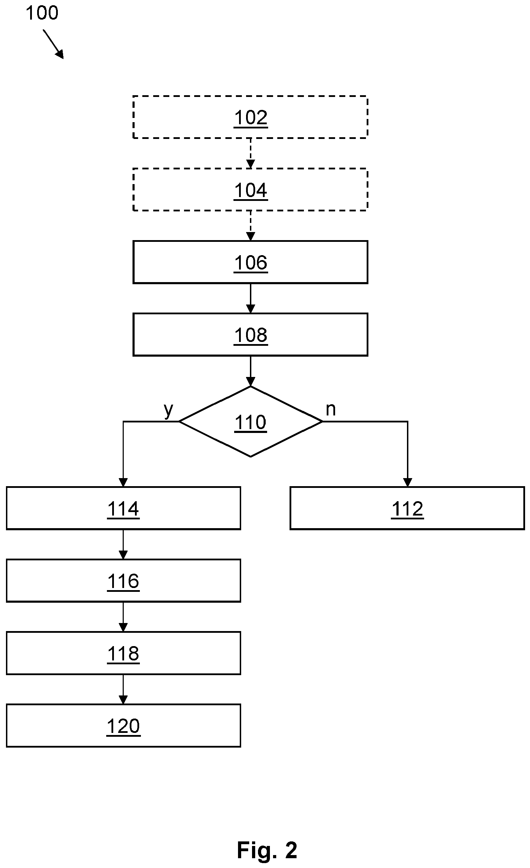

**Fig.** 2 shows a flow diagram 100 according to an embodiment. In an optional step 102, a list of historic states 30 of the plant 10 is obtained. Each entry of this list, i.e. each historic state 30, may comprise a plurality of historic process values 34 and/or at least one historic operational command 32 related to the plant 10. In an optional step 104, the list of historic states 30 is stored. In a step 106, an alarm 45 from at least one sensor 14 and/or from an operator 20 of the plant 10 is received, wherein the alarm 45 is related to a current state 40 of the plant 10. In a step 108, the current state 40 of the plant 10 is obtained, the current state 40 comprising at least one current process value and/or at least one current operational command 22 related to the plant 10. In a step 110, the current state 40 of the plant 10 is compared to a list of historic states 30 of the plant 10, each historic state 30 comprising a plurality of historic process values 34 and/or at least one historic operational command 32 related to the plant 10. If the current state 40 does not match to a subset of at least one of the historic states 30, the method is terminated, in a step 112.

If the current state 40 matches to a subset of at least one of the historic states 30, in a step 114 a simulation is started, based on a simulation model 18 of the plant 10 and the matching historic state 30 as starting state. In a step 116, a plurality of simulations is run, each simulation based on a variation of at least one of the historic operational commands 32. In a step 118, for each simulation of the plurality of simulations, a quality value is determined, based on at least one quality criterion. In a step 120, the variation of the operational command 32 is recommended, which resulted in the simulation with the highest quality value.

### List of Reference Symbols

- 10: industrial plant
- 12: processing unit and/or control unit
- 14: sensor(s)
- 16: actuator(s)
- 18: simulation model, simulator
- 20: operator
- 22: operational command
- 30: historic states
- 32: historic operational command(s)
- 34: historic process values
- 40: current state
- 45: alarm
- 50: operational command and/or recommendation
- 100: flow diagram
- 102 -120: steps

## Claims

1. A computer-implemented method for recommending an operational command (32), which is able to control at least one actuator (16) of an industrial plant (10), the method comprising the steps of:
receiving an alarm (45) from at least one sensor (14) and/or from an operator (20) of the plant (10), wherein the alarm (45) is related to a current state (40) of the plant (10);
obtaining the current state (40) of the plant (10), the current state (40) comprising at least one current process value and/or at least one current operational command (22) related to the plant (10);
comparing the current state (40) of the plant (10) to a list of historic states (30) of the plant (10), each historic state (30) comprising a plurality of historic process values (34) and/or at least one historic operational command (32) related to the plant (10);
if the current state (40) matches to a subset of at least one of the historic states (30), starting a simulation, based on a simulation model (18) of the plant (10) and the matching historic state (30) as starting state;
running a plurality of simulations, each simulation based on a variation of at least one of the historic operational commands (32);
determining, for each simulation of the plurality of simulations, a quality value, based on at least one quality criterion; and
recommending the variation of the operational command (32), which resulted in the simulation with the highest quality value.

2. The method of claim 1, further comprising the steps of:
obtaining the list of historic states (30) of the plant (10), each historic state (30) comprising a plurality of historic process values (34) and/or at least one historic operational command (32) related to the plant (10); and
storing the list of historic states (30).

3. The method of any one of the preceding claims,
wherein the alarm (45) is at least one of:
a critical situation, **characterized by** exceeding of a predefined threshold of at least one current process value, and/or by a current operational command (22),
an alarm of the plant's alarm system,
a tripping of a predefined actuator,
a starting of a subsystem, and/or
a stopping of a subsystem.

4. The method of any one of the preceding claims,
wherein the comparing the current state (40) of the plant (10) to a list of historic states (30) comprises to compare one state or a sequence of states.

5. The method of any one of the preceding claims,
wherein the comparing comprises to use a similarity function.

6. The method of any one of the preceding claims,
wherein each simulation of the plurality of simulations is based on a variation of waiting times, of setpoint value ranges, and/or random removal of steps.

7. The method of any one of the preceding claims,
wherein each one of the simulations is terminated when one of following criteria is reached:
when the simulated process values are below a predefined threshold;
when a composed alarm of the plant's alarm system is deactivated; and/or
when a composed signal for normal plant operation is set.

8. The method of any one of the preceding claims,
wherein the quality criterion for determining the quality value comprises at least one of:
a duration of a time period to deactivate the alarm (45),
a number of processing steps to deactivate the alarm (45),
a number of involved actuators, and/or
a predefined operation range for process variables.

9. A processing unit and/or a control unit (12) of an industrial plant (10), configured for executing the method of any one of claims 1 to 8.

10. A program element for executing the method of any one of claims 1 to 8, when running the program element on a processing unit and/or a control unit (12) of an industrial plant (10).

11. A computer-readable storage medium where a computer program element according to claim 10 is stored on.

12. Use of a method according to any one of claims 1 to 8, and/or to a control unit configured for executing said method, for recommending an operational command (32) and/or for controlling an industrial plant (10) by applying the recommended operational command (32).
